# EUROPÄISCHE PATENTANMELDUNG

(11) **EP 0 849 443 A1**
(43) Veröffentlichungstag der Anmeldung: **24.06.1998**
(21) Anmeldenummer: 97118301.7
(22) Anmeldetag: 22.10.1997
(51) Int. Cl.: F01N 3/20, B01D 53/94, B01D 53/79

(54) **Gemischabgabevorrichtung**

(30) Priorität: 20.12.1996 DE 19653405
(71) Anmelder: ROBERT BOSCH GMBH, 70442 Stuttgart (DE)
(72) Erfinder: Brenner, Frank, Dipl.-Ing., 71642 Ludwigsbrug (DE)

(57) **Zusammenfassung**

Bei bekannten Gemischabgabevorrichtungen zur Einführung eines Reduktionsmittels in ein Abgassystem einer Brennkraftmaschine wird eine Harnstoff-Wasser-Lösung unter Zugabe von Druckluft vor einen Katalysator eingebracht, um die Reduktion von Stickoxiden im Abgas der Brennkraftmaschine zu bewirken. Dabei besteht die Gefahr, daß in der Gemischabgabevorrichtung der zur Zuführung der Druckluft dienende Luftkanal durch auskristallisierenden Harnstoff verstopft wird.

Bei der neuen Gemischabgabevorrichtung wird die Druckluft in einen sich in Strömungsrichtung konisch erweiternden Abschnitt (41) des Mischkanals (39) eingeführt, der stromaufwärts und stromabwärts jeweils zylindrische Abschnitte (40, 44) aufweist und zu dessen Längsachse (46) der Luftkanal (45) geneigt verläuft.

Die Gemischabgabevorrichtung ist insbesondere zur Abgabe einer Harnstoff-Wasser-Lösung vor den Katalysator im Abgassystem einer gemischverdichtenden selbstzündenden Brennkraftmaschine geeignet.

## Beschreibung

### Stand der Technik

Die Erfindung geht aus von einer Gemischabgabevorrichtung nach der Gattung des Hauptanspruchs. Es besteht auch weiterhin die Forderung nach einer Verringerung schädlicher Abgasbestandteile von Brennkraftmaschinen. Zur Stickoxid-Reduktion in den Abgasen von Brennkraftmaschinen, insbesondere gemischverdichtenden selbstzündenden Brennkraftmaschinen, wird eine Harnstoff-Wasser-Lösung vor einen Katalysator in das Abgassystem der Brennkraftmaschine eingebracht. Im Katalysator wird der eingebrachte Harnstoff durch chemische Reaktionen in Ammoniak überführt, welcher die Reduktion von Stickoxiden bewirkt. Es ist schon eine ähnliche Gemischabgabevorrichtung bekannt (EP 0 586 912 A2), bei der jedoch in dem Mischkanal an der Luftzufuhrstelle Harnstoff auskristallisiert und zu einer Ablagerung führt, die die Luftzufuhr nahezu unterbindet.

### Vorteile der Erfindung

Die Gemischabgabevorrichtung mit den kennzeichnenden Merkmalen des Hauptanspruchs hat demgegenüber den Vorteil, daß eine Verstopfung der Luftzufuhr zum Mischkanal durch auskristallisierten Harnstoff verhindert wird.

Durch die in den Unteransprüchen aufgeführten Maßnahmen sind vorteilhafte Weiterbildungen und Verbesserungen der im Hauptanspruch angegebenen Gemischabgabevorrichtung möglich.

Vorteilhaft ist die Neigung des Luftkanales gegenüber der Längsachse, wodurch die zugeführte Luft dem Gemisch ebenfalls eine Strömungskomponente in Richtung der Ausströmung aus der Gemischabgabevorrichtung aufprägt.

### Zeichnung

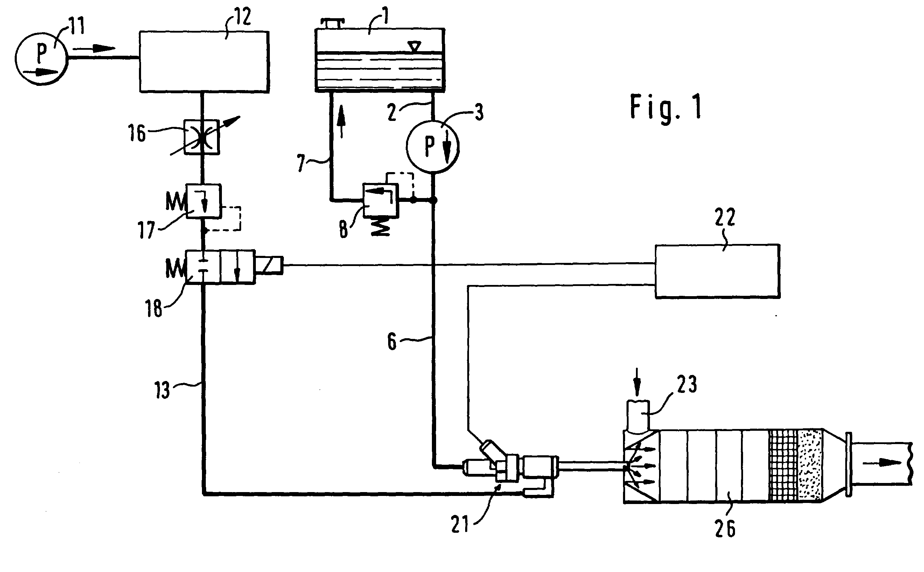

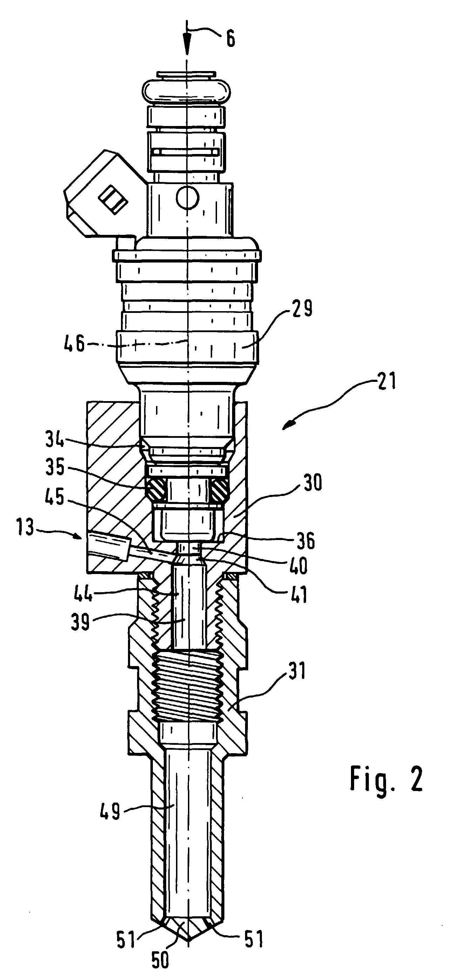

Ein Ausführungsbeispiel der Erfindung ist in der Zeichnung vereinfacht dargestellt und in der nachfolgenden Beschreibung naher erläutert. Es zeigen Figur 1 eine schematisch dargestellte Harnstoff-Dosiereinrichtung für ein Abgassystem einer Brennkraftmaschine, Figur 2 ein erfindungsgemäß ausgebildetes Ausführungsbeispiel einer Gemischabgabevorrichtung zur Verwendung in einer Harnstoff-Dosiereinrichtung nach Figur 1.

### Beschreibung des Ausführungsbeispieles

Bei der Harnstoff-Dosiereinrichtung zur Abgabe einer Harnstoff-Wasser-Lösung vor einen Katalysator im Abgassystem einer Brennkraftmaschine, insbesondere einer gemischverdichtenden selbstzündenden Brennkraftmaschine, nach der Figur 1 ist ein Harnstoff-Wasser-Tank 1 vorgesehen, von dem aus eine Saugleitung 2 zur Saugseite einer druckerzeugenden Harnstofförderpumpe 3 führt. Die Harnstofförderpumpe 3 fördert eine Harnstoff-Wasser-Lösung in eine druckseitig angeschlossene Harnstoffdruckleitung 6. Von der Harnstoffdruckleitung 6 führt eine Entlastungsleitung 7 zurück zum Harnstoff-Wasser-Tank 1. In der Entlastungsleitung 7 ist ein Druckbegrenzungsventil 8 angeordnet, durch das der Druck in der Harnstoffdruckleitung 6 beispielsweise auf 3 bar begrenzt wird.

Die Harnstoff-Dosiereinrichtung weist weiterhin eine Luftpumpe 11 auf, die Druckluft mit beispielsweise 7 bar in einen Luftspeicher 12 fördert. Mit dem Luftspeicher 12 ist ebenfalls eine Druckluftleitung 13 verbunden, in der in Reihe ein verstellbares Drosselventil 16, ein Druckregelventil 17 und ein elektromagnetisch betätigbares 2/2-Wegeventil 18 angeordnet sind. Das Druckregelventil 17 regelt den stromabwärtigen Druck in der Druckluftleitung 13 beispielsweise auf 1 bar. Das 2/2-Wegeventil 18 hat eine Sperrstellung, in der es in Figur 1 dargestellt ist, und eine Durchlaßstellung.

Die Harnstoffdruckleitung 6 und die Druckluftleitung 13 sind an eine Gemischabgabevorrichtung 21 angeschlossen, die elektromagnetisch betätigbar ist und in der eine Mischung der Harnstoff-Wasser-Lösung mit der Druckluft erfolgt. Die Ansteuerung des 2/2-Wegeventils 18 und der Gemischabgabevorrichtung 21 erfolgt durch ein elektronisches Steuergerät 22. Das mittels der Druckluft gleichmäßig und fein aufbereitete Gemisch mit der Harnstoff-Wasser-Lösung wird in ein Abgassystem 23 stromaufwärts eines Katalysators 26 bekannter Bauart eingeblasen. Der in den Katalysator 26 eingebrachte Harnstoff wird durch chemische Reaktionen in Ammoniak überführt, welcher die Reduktion der Stickoxide im Abgas bewirkt.

Die Figur 2 zeigt eine erfindungsgemäß ausgebildete Gemischabgabevorrichtung 21, die im wesentlichen aus einem Einspritzventil 29, einem Mischkanalkörper 30 und einem Sprühkörper 31 gebildet wird. Als Einspritzventil 29 können bei der Benzineinspritzung bekannte methanolfeste Einspritzventile verwendet werden, beispielsweise ein durch die DE 34 11 537 A1 bekanntes Einspritzventil. Das Einspritzventil 29 ist in eine abgestufte Aufnahmeöffnung 34 des Mischkanalkörpers 30 mittels eines Dichtringes 35 abgedichtet eingesetzt und sitzt am Boden 36 der Aufnahmeöffnung 34 auf. Mit verringertem Querschnitt geht vom Boden 36 der Aufnahmeöffnung 34 im Mischkanalkörper 30 ein Mischkanal 39 aus, der vom Boden 36 ausgehend einen ersten zylindrischen Abschnitt 40, einen sich daran anschließenden, sich konisch in Strömungsrichtung erweiternden Abschnitt 41 und einen sich daran anschließenden und einen größeren Querschnitt als der erste zylindrische Abschnitt 40 aufweisenden zweiten zylindrischen Abschnitt 44 hat. In den sich konisch erweiternden Abschnitt 41 des Mischkanals 39 mündet ein Luftkanal 45, der im Mischkanalkörper 30 ausgebildet ist und mit der Druckluftleitung 13 in Verbindung steht. Dadurch ist gewährleistet, daß die durch das Einspritzventil 29 abgespritzte Harnstoff-Wasser-Lösung nicht auf die Mündungsöffnung des Luftkanals 45 trifft, wodurch eine Auskristallation von Harnstoff an dieser Stelle vermieden wird. Der Luftkanal 45 verläuft mit seiner Achse geneigt gegenüber einer Längsachse 46, auf die er beispielsweise ausgerichtet ist. Durch die Neigung der Achse des Luftkanals 45 zur Längsachse 46 trifft die Druckluft mit einer Strömungskomponente auf den abgespritzten Harnstoff-Wasser-Strahl, die in dessen Strömungsrichtung verläuft und damit die Durchströmung des Mischkanals 39 unterstützt. Zur Längsachse 46 sind Einspritzventil 29, Mischkanal 39 und Sprühkörper 31 konzentrisch angeordnet. Die Erstreckung des sich konisch erweiternden Abschnittes 41 in Richtung der Längsachse 46 kann gleich oder größer der Erstreckung des Luftkanals 45 in dieser Richtung sein. Die von dem Einspritzventil 29 in den ersten zylindrischen Abschnitt 40 abgespritzte Harnstoff-Wasser-Lösung wird in dem sich anschließenden, sich konisch erweiternden Abschnitt 41 intensiv mit Druckluft gemischt und über den zweiten zylindrischen Abschnitt 44 in einen Strömungskanal 49 des Sprühkörpers 31 geleitet, der abspritzseitig durch eine Endwand 50 abgeschlossen ist. In der Endwand 50 sind Ausblaseöffnungen 51 vorgesehen, die beispielsweise geneigt zur Längsachse 46 verlaufen und über die die durch Druckluft gleichmäßig und fein aufbereitete Harnstoff-Wasser-Lösung aus dem Strömungskanal 49 in das Abgassystem 23 stromaufwärts des Katalysators 26 ausgeblasen wird. Wenigstens zwei Ausblaseöffnungen 51 sind vorgesehen. Das Einspritzventil 29 wird beispielsweise durch eine nicht dargestellte Klammer am Mischkanalkörper 30 gehalten, während Mischkanalkörper 30 und Sprühkörper 31 beispielsweise miteinander durch eine Schraubverbindung verbunden sind.

## Patentansprüche

1. Gemischabgabevorrichtung zur Einführung wenigstens eines Reduktionsmittels in ein Abgassystem einer Brennkraftmaschine, mit einer Längsachse, mit einem konzentrisch zur Längsachse verlaufenden Mischkanal, in den getrennt Reduktionsmittel und Luft einführbar sind, und mit einem stromabwärts angeordneten Sprühkörper, dadurch gekennzeichnet, daß der Mischkanal (39) einen sich in Strömungsrichtung des eingeführten Reduktionsmittels konisch erweiternden Abschnitt (41) hat und in den sich konisch erweiternden Abschnitt (41) ein Luftkanal (45) für unter Druck stehende Luft mündet.

2. Gemischabgabevorrichtung nach Anspruch 1, dadurch gekennzeichnet, daß der Mischkanal (39) stromaufwärts und stromabwärts des sich konisch erweiternden Abschnittes (41) jeweils wenigstens einen zylindrischen Abschnitt (40, 44) hat.

3. Gemischabgabevorrichtung nach Anspruch 1 oder 2, dadurch gekennzeichnet, daß der Luftkanal (45) geneigt gegenüber der Längsachse (46) verläuft.

4. Gemischabgabevorrichtung nach Anspruch 1, dadurch gekennzeichnet, daß der Sprühkörper (31) wenigstens zwei Ausblaseöffnungen (51) hat.

5. Gemischabgabevorrichtung nach Anspruch 1, dadurch gekennzeichnet, daß als Reduktionsmittel eine Harnstoff-Wasser-Lösung dient.
